# EUROPEAN PATENT SPECIFICATION

(11) **EP 1 401 631 B1**
(45) Date of publication and mention of the grant of the patent: **21.06.2006**
(21) Application number: 02782423.4
(22) Date of filing: 23.04.2002
(51) Int. Cl.: B29C 47/64, B01F 7/00, B01F 7/08

(54) **A MIXING DEVICE**
MISCHVORRICHTUNG
MELANGEUR

(30) Priority: 03.07.2001 IT MI20011406
(43) Date of publication of application: 31.03.2004
(73) Proprietor: Gimac di Maccagnan Giorgio, 21040 Castronno (Varese) (IT)
(72) Inventor: MACCAGNAN, Giorgio, I-21040 Castronno (IT)
(74) Representative: Tansini, Elio Fabrizio
(86) International application number: PCT/IT2002/000259
(87) International publication number: WO 2003/004250

(56) References cited:
- EP-A- 0 563 012
- DE-A- 2 722 933
- US-A- 3 957 256
- US-A- 4 541 982
- US-A- 5 234 656

## Description

The present invention relates to a mixing device according to the preamble of claim 1, to be in particular used as a dynamic mixer in industrial feed plants of the "worm screw" type.

Such a mixing device is known from US-A-4541982.

It is known that in a great number of working machinery for plastic materials or more generally substances in a fluid or granular aggregation state, feed systems are present that move the material to be worked through a worm screw fitted in a substantially cylindrical duct. These worm screws are able to cause advancing of the material in the duct by the thrust action that rotation of the thread or threads, as the case may be, exerts on the material itself. In most of known applications, the material moving forward along such a worm screw needs to be mixed again; for instance, in the case of extrusion or molding apparatus for manufacturing plastic material products, the melted plastic material must be constantly maintained in a state of turbulent mixing, to enable the material flow to have a perfect . homogeneity in its chemical/physical/thermal features, i.e. viscosity, temperature and so on.

It is known from EP 0563012 a mixing device of substantially cylindrical shape, presenting recesses on its side surface and a plurality of mixing ducts having inlets in one recess and outlets in the other recess.

More in particular, such recesses are mainly developing in a direction parallel to the mixing device's axis; beside this, this known device presents only two long-extending recesses, but for symmetry it is likely that the two visible recesses shown in this reference should be coupled to other two non-visible recesses radially symmetrical.

It is also known from US 3957256 another mixing device, wherein a plurality of mixing ducts crosses internally a cylindrical portion of a prismatic body.

The geometric projections of such mixing ducts define, on the side surface of the cylindrical body, helicoidally-developing recesses which are distributed in two separate groups along the body axis.

Finally, it is known from US 4541982 a dynamic mixer suitable for use in extruders and similar machines. Such a mixer is essentially cylindrical and presents annular expansions protruding from its side surface.

The annular expansions have a non-negligible thickness and bear a series of channels which have inlets on a face of an expansion and outlets on the opposite face of the expansion itself; remarkably it is to be noted that such channels are shaped so that a flow portion captured in regions at a major radial distance (from the mixer's axis) are forced through the expansion and re-emerge in a region at a minor radial distance (from the mixer's axis) and vice-versa.

In order to obtain the mentioned mixing, appropriate implements exactly called mixers are presently available which give the material flow a predetermined degree of turbulence.

Mixers commonly available on the market can be formally divided into two big categories: in fact, there are on the one hand the so-called dynamic mixers interacting with the material to be remixed by their movement within the duct, whereas on the other hand there are the so-called static mixers that keep stationary in the duct itself although imparting a substantial turbulence to the material flow.

The dynamic mixers of known type can be accomplished either through appropriate conformations of the worm threads or by a series of bodies having particular shapes (i.e. shapes adapted to generate strong perturbations in the fluids in motion) projecting from the worm body. In other words, in accordance with the known art, appropriate elements causing perturbation, or stirring elements, are arranged which emerge from the worm body or are formed in the thread of the worm screw itself; while the worm screw is rotating, these stirring elements produce strong irregularities in the advancing flow which in turn promote the desired mixing.

The principle on which operation of static mixers is based is substantially similar to that of dynamic mixers, with the difference that the former are not set in motion with respect to the duct through which the material is fed. Generally, static mixers consist of prismatic blocks made of steel or in any case of a highly resistant material, the shape of which matches that of the cavity in which the worm screw is housed, and are placed inside the cavity upstream and/or downstream of the worm screw itself. Formed within these blocks are small tubular passages bringing the two opposing base faces of these prismatic blocks into communication with each other and having a given relative orientation.

When the flow of fluid material passes through these small tubular passages impinging on one of the base faces of the prismatic block substantially acting as a stagnation area for the material flow, said flow is submitted to a deflection that in a more or less marked way degenerates into turbulent phenomena downstream of the static mixer. For instance, the small tubular passages are disposed in such a manner that a rotation is imparted to the fluid threads, in the same manner as when a bundle of parallel threads is twisted.

The two known techniques briefly described above however have some limits. In fact, if dynamic mixers of known type are taken into account, it should be noted that since stirring elements need to be available which radially jut out of the worm body; execution of complicated and expensive working operations are required; in addition, the particular geometries of the stirring elements themselves that, as already said, can even be formed in the worm thread, often require material removal from regions that can be handled with difficulty.

It should be also recognized that the turbulence induced in the material flow by these known dynamic mixers can appear to be unsatisfactory for the purpose of ensuring a perfect homogeneity in the physico-chemical features of the flow because the fluid threads concerned with the action of the stirring elements always keep close to the stirring elements themselves that move consistently with the worm screw, always remaining in the vicinity of the same flow portion subjected to perturbation. In other words, a non negligible inconvenience in the dynamic mixers of known type is given by the fact that these mixers promote mixing operations in the material flow that are localized, i.e. ideally divided into "turbulence cells", but are not able to determine an efficient overall mixing within the whole flow.

On the other hand, the disadvantages of static mixers reside in that the latter are to be conveniently and firmly fastened within the cylinder; obviously this impairs the construction flexibility of same because not only it is practically impossible to arrange these static mixers at the worm screw (these devices must rather be mounted before or after the worm itself), but also because very precise working operations on the workpieces are required, and mixers themselves need high accuracy in manufacture and/or mounting.

Furthermore, it is to be pointed out that static mixers that practically form a strong restriction within the material inflow cylinder, produce an-important flow resistance that must be opposed by imparting a great mechanical power to the worm screws; this obviously adversely affects energy absorption by the plant and therefore also gives rise to an increase in the production costs.

Under this situation, the technical task underlying the present invention is to conceive a mixing device capable of substantially obviating the mentioned limits.

Mainly, it is an aim of the present invention to conceive a mixing device of easy manufacture and adapted to be positioned in parts of a worm screw that do not have particular problems in terms of working and/or mechanical-resistance.

Within the scope of this technical task it is an important aim of the invention to provide a mixing device efficiently operating not only at localized turbulence cells, but also capable of extending the mixing action in a generally distributed manner within the whole material flow; in other words, the present invention technically aims at providing a mixing device not only enabling a localized mixing but also producing turbulent perturbations mutually interacting on the different regions of the material flow moving forward in the worm screw.

In addition, the present invention aims at providing a mixing device that can be arbitrarily positioned in a worm screw and can be combined in a modular manner; at the same time, another aim of the present invention is to provide a mixing device that does not produce too much flow resistance in the material feed duct, or that at all events produces a flow resistance that can be easily compensated for without use of great mechanical powers transmitted to the worm screw.

Finally, the present invention also aims at providing a mixing device involving low production costs, high reliability and easy servicing; in addition, the present invention aims at providing a mixing device offering an important self-cleaning ability.

The technical task mentioned and the aims specified are substantially achieved by a mixing device having the features set out in claim 1.

Description of a preferred but not exclusive embodiment of a mixing device in accordance with the invention is now given hereinafter with the aid of the accompanying drawings, in which:
- Fig. 1 is a side view, partly in section, of a mixing device in accordance with the present invention; Fig. 2 is a section of the mixing device taken along line II-II in Fig. 1;
- Fig. 3 is a section according to line III-III in Fig. 1 of an alternative embodiment of the mixing device in accordance with the present invention; and
- Fig. 4 is a side view, partly in section, of a worm screw including the mixing device in accordance with the present invention.

With reference to the drawings, the mixing device in accordance with the invention is generally identified at 1.

It substantially comprises a central body 2 of substantially cylindrical conformation. The central body 2 is designed to be at least partly dipped in a flow of material to be mixed and extends along axis 3.

The central body 2 further has a side surface 4 that is slightly touched by the material flow into which device 1 is dipped. In this connection it should be noted that the side surface 4 is oriented with respect to the flow in such a manner that it does not form stagnation regions, i.e. regions where the local velocity of the flow is reduced to zero; but rather enables generation of a limit layer which in turn will dynamically evolve following modalities better specified in the following.

Advantageously, this central body 2 further comprises at least one mixing duct 5 having an inlet orifice 5a and an outlet orifice 5b opposing each other, and opening at both ends thereof onto the side surface 4. In other words, the inlet and outlet orifices 5a and 5b open towards the flow of material at the side surface 4 of the central body 2.

By virtue of this particular arrangement, the flow of material running close to the side surface 4 of the central body 2 is intercepted and conveyed to the mixing duct 5, passing through the central body 2 and emerging again at a flow region different from that at which interception took place.

In other words, through exploitation of the above mentioned mechanism, a remixing jet coming out of the mixing duct 5 is created which practically is introduced again into the "main" flow with a given angle, thereby creating an efficient remixing action which generates turbulence.

Conveniently, creation of several remixing jets can be easily obtained by a plurality of mixing ducts 5 suitably disposed and sized depending on requirements.

In accordance with the present invention, the mixing device 1 can operate while remaining substantially stationary with respect to the duct, provided the mixing ducts 5 are conveniently oriented so as to intercept a sufficient part of the material flow to be remixed; in this case device 1 is centrally fitted with respect to the axis of the duct through which the material to be remixed is caused to pass or also with a given eccentricity, in such a manner that the flow runs along the side wall of device 1 and can properly interact therewith.

In any case in a particularly appreciable embodiment of' the present invention, device 1 can be employed following the operating modalities typical of dynamic mixers: in this case axis 3 of the central body 2 can act as the rotation axis for device 1, but it is also possible for the device 1 to rotate according to an axis which is not coincident with the rotation axis 3, by acting for example in such a manner that a certain processional angle should exist between the rotation axis and the true rigid-rotation axis.

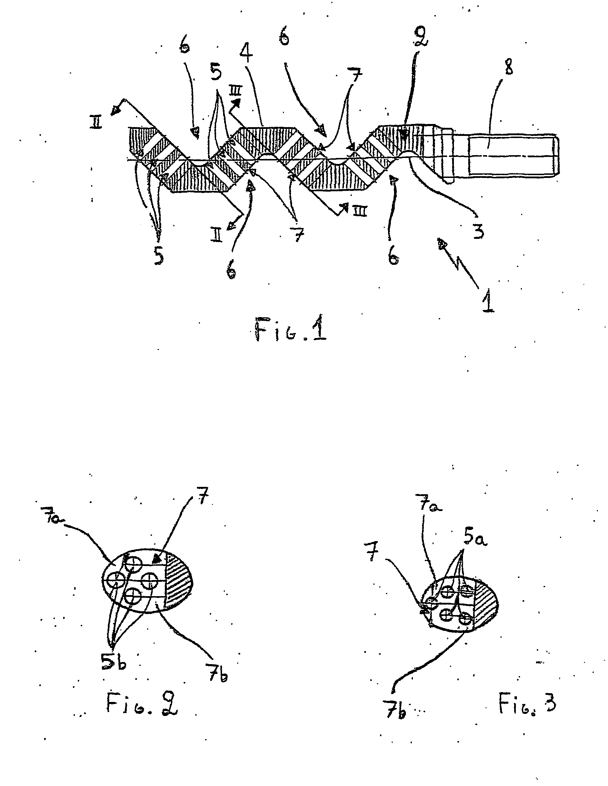

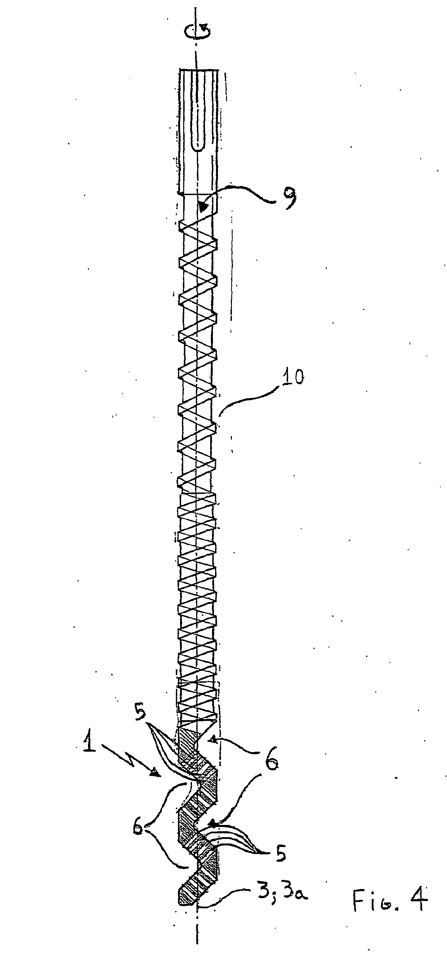

In order to further improve the remixing quality, the present invention may contemplate the presence of at least one notch 6 formed in the side surface 4. In this case the mixing duct or ducts 5 open onto such at least one notch 6, either on the side of the inlet orifice 5a or on the side of the outlet orifice 5b. As can be seen from the accompanying drawings, the three-dimensional shape of this notch 6 can be of any nature: for instance, it can be defined by a curved surface or by two or.more substantially flat surfaces defining a wedge-shaped area (as shown in Figs. 1 and 4, for example).

Still in Fig. 1 it is possible to see that a plurality of notches 6 sequentially disposed along axis 3 are provided in the illustrative embodiment of the present invention. These notches 6 are placed on opposing sides with respect to an ideal plane containing axis 3 that can also be defined as the median plane of the central body 2, so as to ideally define two series of notches spaced apart by predetermined amounts along axis 3 and offset from each other by a predetermined distance, still relative to axis 3.

As regards the last-mentioned structural feature the presence of more than two series of notches 6 may be provided; for instance, three series of notches 6 can be arranged which are radially spaced apart by 120° from each other or four series of notches 6 radially spaced apart by 90° and so on, depending on current requirements.

Advantageous, due to this particular arrangement of notches 6, a multiplicity of mixing ducts 5 can be defined so that a particularly efficient remixing mechanism is set up which is capable of uniformly influencing the whole region concerned with the material flow. In fact the mixing ducts 5 can be such arranged that each or only part of them opens onto a first notch 6, typically at the inlet orifice 5a and simultaneously opens onto a second notch 6 sequentially subsequent to the first one, at the outlet orifice 5b. In other words, in accordance with the present invention a plurality of mixing ducts 5 opening at the respective inlet 5a and outlet 5b orifices onto two sequentially subsequent recesses 6 can be arranged.

In more detail, it is possible to see that each of notches 6 has a surface 7 which in turn defines a concavity facing axis 3 of body 2; from a structural point of view, this surface 7 comprises a first portion 7a located close to the side surface 4 or, in other words, in close proximity to the side surface 4, and a second portion 7b located internally of the first portion 7a. For the sake of clarity, it is apparent that the first portion 7a is more external, in a radial direction relative to axis 3, than the second portion 7b.

Practically the mixing ducts 5 the inlet orifices 5a of which are included within the first portion 7a of surface 7 open, at their outlet orifice 5b, into the second portion 7b of the subsequent notch 6. In other words, at least one mixing duct 5 has its inlet orifice 5a at the first portion 7a of a first notch 6 and its outlet orifice 5b at the second portion 7b of a second notch 6.

By virtue of this particular architecture, portions of the material flow to be remixed located at greater radial distances with respect to axis 3, or at all events the rotation axis of device 1, are captured, passed through the mixing ducts 5 and caused to emerge again at a completely different flow region, not only with respect to the relative position with the side surface of the mixing device 1, but also at a point having a different radial coordinate! In fact, it is to be pointed out that more external flow portions, passing from a notch 6 to the next one, will emerge more internally, whereas flow portions closer to axis 3, or more generally in the middle of the duct in which the mixing device 1 operates, after passing from a recess 6 to the next one, will be projected and emerge in a peripheral flow region.

It is further to be pointed out that, due to rotation of the mixing device 1, the remixing jets are not stationary in space and/or time, but they continuously vary their position in relation to rotation in space of the mixing ducts 5.

In short, through exploitation of the particular construction architecture of the present invention, a highly turbulent flow is created that by mechanisms of exchange of viscous forces as well as transfer of thermal energy of the convective type, succeeds in homogenizing the physico/chemical parameters of the material flow; advantageously, the extension of the turbulent structures concerns the overall flow and is not limited to flow portions subjected to perturbation interacting with each other in a marginal manner.

This innovative and original mechanism for creating turbulence within the material flow can be conveniently obtained even when more than two series of notches 6 are present, as already described above; in this case it is possible for one or more mixing ducts 5 to have several inlet orifices and/or outlet orifices, 5a and 5b, each of which can be arbitrarily positioned on the first or second portion of surfaces 7 in notches 6, the choice of the possible combinations of the structural features obviously depending on current requirements, such as sizes of ducts 5, workability of the material forming the central body 2 and so on.

The present invention may also contemplate the presence of interconnecting means 8 which is designed for engagement with an active body and practically makes the mixing device 1 integral with this active body. This active body may consist of an appropriate support formed within the duct or, according to the preferred embodiment herein illustrated, can be a worm screw of any known type employed in feed plants for molds or extruders of polymeric materials, for example. Conveniently, these interconnecting means 8 can be made in any manner; for instance, in the accompanying figures said means consists of a screw thread extending from one end of the central body 2.

It is a further object of the present invention to provide a worm screw to be conveniently employed in plants for feeding fluid and/or powdered materials; this worm screw comprises a worm body 9 extending along a worm axis 3a around which the worm screw is rotated under operating conditions and from which at least one threaded portion 10 emerges. In fact, depending on requirements, a worm screw may be provided which has several threads and/or is characterized by constant or varying screw pitches. At least one mixer device 1 of the type described above may be advantageously associated with the worm body 9.

Conveniently, the central body 2 of the mixing device 1 may be associated with the worm body 9 in the most appropriate manner: for instance, the central body 2 may substantially be an extension of the worm body 9, as shown in Fig. 1, where practically it is shown that the central body 2 is a portion of the worm screw in which the thread is not present, which portion integrally extends from the threaded portion of the worm screw itself. Alternatively, the mixing device 1 may be associated with the worm body 9 through the above mentioned interconnecting means 8 and in this case the worm body 9 includes an interconnecting seating adapted to receive the interconnecting means 8 in engagement.

Also the relative fitting of the mixing device 1 with respect to the worm axis 3a can be based on current requirements; in the preferred embodiment shown in the drawings it is possible to see that axis 3 of the mixing device 1 and the worm axis 3a are parallel and practically coincident.

It is also advantageously possible to position the mixing device 1 with great freedom with respect to the threaded portion of the worm screw, depending on the advancing efficiency required by the feed plant. In more detail, the following arrangement may be provided: a worm screw having a first threaded length, a mixing device 1 disposed subsequently and without gap with respect to the first threaded length, and a second subsequent threaded length integrally extending from the mixing device 1, opposite to the first threaded length. In this way the flow resistance induced by the remixing action of the mixing device 1 can be recovered by the thrust action exerted by the second threaded length.

More generally, in accordance with the present invention, the worm screw may comprise a given number of threaded lengths disposed upstream and/or downstream of at least one device 1, or even more mixing devices 1 may be provided which are suitably alternated with threaded lengths, depending on the remixing degree and the feed rates that are wished to be obtained.

The invention achieves important advantages.

In fact, first of all, it will be appreciated that the particular construction architecture of the present invention enables the mixing device to be quickly manufactured without any problem; in addition, the substantial absence of elements jutting out of the worm body enables the latter to be installed more easily within the feed duct.

Secondly, it will be also recognized that the remixing action exerted by the present mixing device is substantially distributed in the whole material flow and does not only create the already mentioned turbulence cells. In other words, the innovative and original features of the present invention enable a high degree of interaction between the different parts of the flow to be established in a continuous and repeated manner; this advantageously results in an important increase in the homogeneity degree of the physico/chemical features of the flow itself and therefore enables the machinery to work better.

In addition, the present invention offers a great freedom of relative positioning between one or more mixing devices and the threaded portions of the worm screws, so that the requirements concerning mixing and flow rate maintenance can be met, within a wide range of operating situations.

It will be also appreciated that the structure of the present invention enables a satisfactory remixing to be obtained without inducing too much flow resistance, which is advantageous from the point of view of energy saving and, as a result, of cost reductions.

Finally, an important technical advantage of the present invention is due to the fact that the particular construction geometry of same is able to ensure auto-cleaning abilities to the device itself. In fact, possible material deposits and/or encrustations within the mixing ducts are easily and automatically removed due to the pressure difference established at the two ends of the ducts themselves; at the same time, due to the absence of stagnation regions on the side wall, arising of substantially stationary bubbles of material that may deposit on the device, following cooling for example, is not promoted.

## Claims

1. A mixing device comprising:
- a central body (2) designed to be at least partially dipped into a flow of material to be remixed, said central body (2) extending along an axis (3) and having a side surface (4);
- a plurality of recesses (6) formed in the side surface (4) and sequentially disposed along the body axis (3); and
- a plurality of mixing ducts (5) having an inlet orifice (5a) and an outlet orifice (5b) opposite to said inlet orifice (5a), said inlet orifices (5a) opening onto the side surface (4) into a first recess(6) and said outlet orifices (5b) opening onto the side surface (4) into a second recess (6) sequentially subsequent to said first recess (6);
**characterized in that** said recesses (6) are shaped as notches extending transversely with respect to the axis (3) and define at least two series of said notches spaced apart by predetermined amounts along axis (3) and offset from each other by a predetermined distance.

2. A mixing device as claimed in claim 1, **characterized in that** the notches (6) are located on opposite sides of the side surface (4) relative to a plane containing the axis (3).

3. A device as claimed in claims 1 or 2, **characterized in that** each of the recesses (6) has a surface (7) defining a concavity facing the axis (3) of the body (2), said surface comprising a first portion (7a) located in the vicinity of the side surface (4) and a second portion (7b) located internally with respect to said first portion (7a), the first portion (7a) being radially more external than the second portion (7b), with respect to the body axis (3).

4. A device as claimed in claim 3, **characterized in that** it comprises at least one mixing duct (5) having its inlet orifice (5a) at the first portion (7a) and having its outlet orifice (5b) at the second portion (7b).

5. A device as claimed in anyone of the preceding claims, **characterized in that** it further comprises interconnecting means (8) designed for engagement with an active body, said active body preferably being a worm screw.

6. A worm screw, preferably for feeding plants for fluid and/or powdered materials, comprising a worm body (9) extending along a worm axis (3a) and at least one threaded portion (10) radially emerging from said worm body (9), **characterized in that** it further comprises at least one mixing device (1) in accordance with anyone of the preceding claims and associated with the worm body (9).

7. A worm screw as claimed in claim 6, **characterized in that** the central body (2) of the device (1) is substantially an extension without gap of the worm body (9).

8. A worm screw as claimed in claim 6, **characterized in that** the mixing device (1) is associated with the screw body (9) through said interconnecting means (9), the worm body (9) comprising an interconnecting seating adapted to receive the interconnecting means (8) in engagement.

9. A worm screw as claimed in anyone of the preceding claims from 6 to 8, **characterized in that** the axis (3) of the device (1) and the worm axis (3a) are parallel and preferably coincident.

10. A worm screw as claimed in anyone of the preceding claims from 6 to 9, **characterized in that** it comprises a given number of threaded lengths disposed upstream and/or downstream of at least one mixing device (1).

## Patentansprüche

1. Mischvorrichtung umfassend:
- einen mittigen Körper (2), der dazu bestimmt ist, mindestens teilweise in einem zu vermischenden Materialstrom eingetaucht zu werden, wobei der mittige Körper (2) sich längs einer Achse (3) erstreckt und eine Seitenfläche (4) aufweist;
- eine Vielzahl von in der Seitenfläche (4) ausgebildeten Aussparungen (6), die in Reihenfolge längs der Achse (3) des Körpers angeordnet sind; und
- eine Vielzahl von Mischleitungen (5) mit einer Eingangsöffnung (5a) und einer zur Eingangsöffnung (5a) abgewandten Ausgangsöffnung (5b), wobei die Eingangsöffnungen (5a) sich auf der Seitenfläche (4) in einer ersten Aussparung (6) zeigen und die Ausgangsöffnungen (5b) sich auf der Seitenfläche (4) in einer zweiten der ersten Aussparung (6) folgenden zweiten Aussparung (6) zeigen,
**dadurch gekennzeichnet, dass** die Aussparungen (6) nach der Art von "V"-förmigen Einschnitten geformt sind, die sich quer zur Achse (3) erstrecken und mindestens zwei Reihen von "V"-förmigen Einschnitten festlegen, die gemäß vorgegebenen Beträgen längs der Achse (3) voneinander beabstandet und gemäß einem vorgegebenen Abstand zueinander versetzt sind.

2. Mischvorrichtung nach Anspruch 1, **dadurch gekennzeichnet, dass** die "V"-förmigen Aussparungen an gegenüber einer die Achse (3) enthaltenden Ebenen abgewandten Seiten der Seitenfläche (4) angeordnet sind.

3. Mischvorrichtung nach Anspruch 1 oder 2,
**dadurch gekennzeichnet, dass** jede der Aussparungen (6) eine Oberfläche (7) besitzt, die eine zur Achse (3) des Körpers (2) gerichtete Konkavität festlegt, wobei die Oberfläche einen ersten in der Nähe der Seitenfläche (4) gelegenen Abschnitt (7a) und einen zweiten Abschnitt (7b) umfasst, der gegenüber dem ersten Abschnitt (7a) innen angeordnet ist, wobei der erste Abschnitt (7a) radial der äußerste des zweiten Abschnittes (7b) gegenüber der Achse (3) des Körpers ist.

4. Mischvorrichtung nach Anspruch 3, **dadurch gekennzeichnet, dass** sie mindestens eine Mischleitung (5) umfasst, die die eigene Eintrittsöffnung (5a) im Bereich des ersten Abschnittes (7a) und die eigene Ausgangsöffnung (5b) im Bereich des zweiten Abschnittes (7b) aufweist.

5. Mischvorrichtung nach einem beliebigen der vorstehenden Ansprüche, **dadurch gekennzeichnet, dass** sie überdies Verbindungsmittel (8)umfasst, die dazu bestimmt sind, an einem aktiven Körper in Eingriff zu kommen, wobei der aktive Körper bevorzugter Weise eine Schnecke ist.

6. Schnecke, bevorzugter Weise für Speiseanlagen von fließfähigen und/oder pulverförmigen Materialien, umfassend einen Schneckenkörper (9), der sich längs einer Schneckenachse (3a) erstreckt und mindestens einen Gewindeabschnitt (10), der radial vom Schneckenkörper (9) vorsteht, **dadurch gekennzeichnet, dass** sie überdies mindestens eine Mischvorrichtung (1) gemäß einem beliebigen der vorstehenden Ansprüche umfasst und die dem Schneckenkörper (9) zugeordnet ist.

7. Schnecke nach Anspruch 6, **dadurch gekennzeichnet, dass** der mittige Körper (2) der Mischvorrichtung (1) im Wesentlichen eine ununterbrochene Fortsetzung des Schneckenkörpers (9) ist.

8. Schnecke nach Anspruch 6, **dadurch gekennzeichnet, dass** die Mischvorrichtung (6) dem Schneckenkörper (9) über die Verbindungsmittel (8) zugeordnet ist, wobei der Schneckenkörper (9) eine Verbindungsaufnahme umfasst, die die Verbindungsmittel (8) aufnimmt.

9. Schnecke nach einem beliebigen der vorstehenden Ansprüche von 6 bis 8, **dadurch gekennzeichnet, dass** die Achse (3) der Mischvorrichtung (1) und die Schneckenachse (3a) zueinander parallel und bevorzugter Weise zusammenfallend sind.

10. Schnecke nach einem beliebigen der vorstehenden Ansprüche von 6 bis 9, **dadurch gekennzeichnet, dass** sie eine vorgegebene Anzahl von Gewindeabschnitten umfasst, die vor und/oder nach mindestens einer Mischvorrichtung (1) angeordnet sind.

## Revendications

1. Mélangeur comprenant:
- un corps central (2) destiné à être plongé au moins partiellement dans un écoulement de matière à remuer, ledit corps central (2) s'étendant le long d'un axe (3) et ayant une surface latérale (4);
- une pluralité de renfoncements (6) formés dans la surface latérale (4) et disposés en séquence le long de l'axe (3) du corps; et
- une pluralité de conduits de mélange (5) ayant un orifice d'entrée (5a) et un orifice de sortie (5b) opposé audit orifice d'entrée (5a), lesdits orifices d'entrée (5a) débouchant sur ladite surface latérale (4) dans un premier renfoncement (6) et lesdits orifices de sortie (5b) débouchant sur la surface latérale (4) dans un deuxième renfoncement (6) qui suit en séquence ledit premier renfoncement (6);
**caractérisé en ce que** lesdits renfoncements (6) ont la forme d'entailles en "V" s'étendant en sens transversal par rapport à l'axe (3) et définissent au moins deux séries desdites entailles en "V" espacées selon des quantités convenables le long de l'axe (3) et décalées les unes des autres d'une distance prédéterminées.

2. Mélangeur selon la revendication 1, **caractérisé en ce que** les entailles en "V" (6) sont placées sur des côtés opposés de la surface latérale (4) par rapport à un plan contenant l'axe (3).

3. Mélangeur selon les revendications 1 ou 2, **caractérisé en ce que** chacune des entailles en "V" (6) a une surface (7) définissant une concavité tournée vers l'axe (3) du corps (2), ladite surface comprenant une première portion (7a) placée à proximité de la surface latérale (4) et une deuxième portion (7b) placée intérieurement par rapport à ladite première portion (7a), la première portion (7a) se trouvant plus à l'extérieur que la deuxième portion (7b) en sens radial, par rapport à l'axe (3) du corps.

4. Mélangeur selon la revendication 3, **caractérisé en ce qu'**il comporte au moins un conduit de mélange (5) ayant son orifice d'entrée (5a) en correspondance avec la première portion (7a) et ayant son orifice de sortie (5b) en correspondance avec la deuxième portion (7b) .

5. Mélangeur selon l'une quelconque des revendications précédentes, **caractérisé en ce qu'**il comporte en outre des moyens d'interconnexion (8) destinés à s'engager à un corps actif, ledit corps actif étant de préférence une vis sans fin.

6. Vis sans fin, de préférence pour des installations d'alimentation en matières fluides et/ou en poudre, comprenant un corps de vis (9) s'étendant le long d'un axe de vis (3a) et au moins une portion filetée (10) émergeant en sens radial dudit corps de vis (9), **caractérisée en ce qu'**elle comporte en outre au moins un mélangeur (1) suivant l'une quelconque des revendications précédentes et associé au corps de vis (9).

7. Vis sans fin selon la revendications 6, **caractérisée en ce que** le corps central (2) du mélangeur (1) est essentiellement une extension sans interruption du corps de vis (9).

8. Vis sans fin selon *la revendication 6, **caractérisée en ce que** le mélangeur (1) est associé au corps de vis (9) par l'intermédiaire desdits moyens d'interconnexion (9), le corps de vis (9) comprenant un siège d'interconnexion destiné à recevoir en engagement les moyens d'interconnexion (8).

9. Vis sans fin selon l'une quelconque des revendications précédentes 6 à 8, **caractérisée en ce que** l'axe (3) du mélangeur (1) et l'axe de vis (3a) sont parallèles et de préférence coïncidents.

10. Vis sans fin selon l'une quelconque des revendications précédentes 6 à 9, **caractérisée en ce qu'**elle comporte un nombre donné de tronçons filetés disposés à l'amont et/ou à l'aval d'au moins un mélangeur (1).
